# EUROPÄISCHE PATENTSCHRIFT

(11) **EP 2 502 777 B1**
(45) Veröffentlichungstag und Bekanntmachung des Hinweises auf die Patenterteilung: **10.08.2016**
(21) Anmeldenummer: 12000457.7
(22) Anmeldetag: 26.01.2012
(51) Int. Cl.: B60L 11/18, H02J 7/02, B60L 11/00, H02J 7/00, H02J 7/34

(54) **Flurförderzeug mit einem elektrischen Antrieb**
Industrial truck with an electrical drive
Chariot de manutention doté d'un entraînement électrique

(30) Priorität: 24.03.2011 DE 102011014924
(43) Veröffentlichungstag der Anmeldung: 26.09.2012
(73) Patentinhaber: Jungheinrich Aktiengesellschaft, 22047 Hamburg (DE)
(72) Erfinder: Maasland, Hans-Hermann, 25451 Quickborn (DE)
(74) Vertreter: Hauck Patentanwaltspartnerschaft mbB

(56) Entgegenhaltungen:
- DE-A1- 10 151 656
- DE-A1-102008 021 090
- US-A1- 2005 077 879
- US-A1- 2007 090 808

## Beschreibung

Die vorliegende Erfindung betrifft ein Flurförderzeug mit einem elektrischen Antrieb, der aus einer ersten und/oder einer zweiten Spannungsquelle gespeist werden kann. Für die erste Spannungsquelle sind mehrere in Reihe geschaltete Batterien vorgesehen. Für die zweite Spannungsquelle sind mehrere in Reihe geschaltete Kondensatoren vorgesehen.

Auf DE 10 2008 021 090 A1 ist eine Schaltungsanordnung zum Austausch elektrischer Ladung zwischen Akkumulatoren einer Akkumulatoranordnung bekannt. Die bekannte Schaltungsanordnung besitzt eine Anzahl von ersten Reihenschaltungen zum Parallelschalten mit jeweils einem Akkumulator, die jeweils ein Schaltelement mit einer Laststrecke und einem Ansteueranschluss sowie ein in Reihe zu der Laststrecke geschaltetes induktives Speicherelement aufweist. Ferner besitzt die bekannte Schaltungsanordnung eine weitere Reihenschaltung zum Parallelschalten mit der Akkumulatoranordnung, die ein Schaltelement mit einer Laststrecke und einem Ansteueranschluss und ein in Reihe zu der Lastrecke des Schaltelements geschaltetes induktives Speicherelement aufweist, wobei das induktive Speicherelement der weiteren Reihenschaltung induktiv mit den induktiven Speicherelementen der ersten Reihenschaltung gekoppelt ist. Eine Ansteuerschaltung ist mit den Steueranschlüssen gekoppelt und ermittelt anhand von gemessenen Akkumulatorspannungen welchem Akkumulator elektrische Energie entnommen und welchem Akkumulator die entnommene Energie zugeführt werden soll.

Aus US 2010/0090649 A1 ist eine Schaltungsanordnung von in Reihe geschalteten Akkumulatoren bekannt geworden, die über einen aktiven Balancierschaltkreis untereinander balanciert werden. Hierbei arbeitet der Balancierschaltkreis als Sperrwandler, bei dem ein gemeinsamer Eisenkern magnetisiert wird und die bereitgestellten Magnetisierungskerne durch die einzelnen Schaltkreise entsprechend ihrem Ladezustand entnommen werden.

Der Erfindung liegt die Aufgabe zugrunde, ein Flurförderzeug mit einem Fahrzeugenergiemanagement bereitzustellen, das bei einer aktiven Balancierung zwischen einzelnen in Reihe geschalteten Spannungen sowie einer entsprechenden Ladegerätfunktion zusätzlich eine einfache Steuerung des Energieflusses beim Betrieb des Flurförderzeugs erlaubt.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einem elektrischen Antrieb ausgestattet, der aus einer ersten und einer zweiten oder nur aus einer der beiden Spannungsquellen gespeist werden kann. Für die erste Spannungsquelle sind mehrere in Reihe geschaltete Batterien vorgesehen, für die zweite Spannungseinheit mehrere in Reihe geschaltete Kondensatoren. Erfindungsgemäß ist eine Balanciereinheit vorgesehen, die in jedem Betriebszustand des Flurförderzeugs aktiv die Batterien und aktiv die Kondensatoren bei ungleicher Spannung balanciert. Die im Hinblick auf die elektrische Energieversorgung relevanten Betriebszustände betreffen insbesondere das Laden der Spannungsquellen über ein externe Spannung, den motorischen Betrieb des elektrischen Antriebs, in dem eine elektrische Leistung aus einer oder beiden Spannungsquellen entnommen wird und den generatorischen Betrieb des elektrischen Antriebs, in dem ein Rückspeisestrom zum Wiederaufladen zur Verfügung steht. Die Erfindung beruht auf der Erkenntnis, dass in jedem der Betriebszustände des Flurförderzeugs eine aktive Balancierung zwischen den in Reihe geschalteten Batterien und eine aktive Balancierung zwischen den in Reihe geschalteten Kondensatoren erfolgen kann.

Erfindungsgemäß besitzt die Balanciereinheit eine Entmagnetisierungseinheit, die an eine Netzspannungsquelle anschließbar ist und die induktiv an den Überträger der Spannungsquelle gekoppelt ist. Für den Ladevorgang wird zur Übertragung der elektrischen Energie von der Entmagnetisierungseinheit in einzelne Spannungsquellen auf denselben Überträger zurückgegriffen, mit dem entweder die Balancierung der in Reihe geschalteten Batterien oder der in Reihe geschalteten Kondensatoren innerhalb der Spannungsquellen erfolgt. Dieser Ansatz vereinfacht den Gesamtaufbau weiter dahingehend, dass für den Ladevorgang jetzt auch auf die Schaltkreise für die Balancierung zurückgegriffen werden kann.

Erfindungsgemäß weist die Entmagnetisierungseinheit ferner für jede Spannungsquelle mindestens ein Schaltelement und einen induktiven Ladespeicher für jeden Überträger auf, wobei im eingeschalteten Zustand die Schaltelemente elektrische Energie von dem induktiven Speicher auf die Überträger und im ausgeschalteten Zustand ein Entmagnetisierungsstrom aus dem Überträger über den induktiven Speicher in einen kapazitiven Speicher der Entmagnetisierungseinheit übertragen wird. Unter diesem Gesichtspunkt arbeitet die Entmagnetisierungseinheit nach dem Prinzip eines Eintaktpluswandlers, bei dem im Schaltzustand elektrische Energie übertragen wird.

In einer bevorzugten Ausgestaltung ist die Balanciereinheit ausgebildet, um elektrische Energie von einer Batterie einer höheren Spannung an eine oder mehrere Batterien mit einer niedrigeren Spannung zu übertragen. Ebenso ist die erfindungsgemäße Balanciereinheit bevorzugt dafür ausgebildet, elektrische Energie von einem Kondensator mit einer höheren Spannung auf einen oder mehrere Kondensatoren mit einer niedrigeren Spannung zu übertragen. Wichtig bei der erfindungsgemäßen Balanciereinheit ist, dass dieser Balancierausgleich zwischen den in Reihe geschalteten Batterien und Kondensatoren nicht nur während eines Ladevorgangs erfolgt, sondern die Balanciereinheit in jedem Betriebszustand des Flurförderzeugs für einen Ausgleich der Spannungen zwischen den Batterien und den Kondensatoren sorgt.

In einem Ladevorgang des Flurförderzeugs, wenn die Spannungsquellen über eine externe Netzspannung geladen werden, übertragt die Balanciereinheit elektrische Energie von einer Spannungsquelle, die bereits vollständig geladen ist auf die andere Spannungsquelle, falls diese noch nicht vollständig geladen ist. Dies bedeutet, dass mit Hilfe der Balanciereinheit die Spannung nicht nur innerhalb einer der beiden Spannungsquellen balanciert werden, sondern dass zusätzlich während des Ladevorgangs elektrische Energie, die von der externen Netzspannung bereitgestellt wird, von der bereits vollständig aufgeladenen Spannungsquelle auf die noch nicht vollständig geladene Spannungsquelle übertragen wird. Hierdurch steht für die noch nicht vollständig geladene Spannungsquelle eine elektrische Leistung zum Laden zur Verfügung, nachdem eine der beiden Spannungsquellen bereits vollständig geladen ist.

In einer weiteren bevorzugten Ausgestaltung des erfindungsgemäßen Flurförderzeugs wird im generatorischen Betrieb ein Ladestrom des generatorisch betriebenen elektrischen Antriebs über die Balanciereinheit an eine der Spannungsquellen angelegt. Bevorzugt wird aufgrund der geringeren Kapazität der Kondensatoren der Ladestrom beim Rückspeisen an diese angelegt.

In einer bevorzugten Ausgestaltung ist die Balanciereinheit für jede der Spannungsquellen mit einem induktiven Überträger ausgestattet, mit dem die Batterien oder Kondensatoren über einen Schaltkreis induktiv gekoppelt sind. Der Balancierausgleich zwischen den Batterien oder zwischen den Kondensatoren erfolgt über die den Batterien bzw. Kondensatoren zugeordneten Schaltkreise, die induktiv an den Überträger gekoppelt sind.

Bevorzugt weist jeder der Schaltkreise einen induktiven Speicher und ein Schaltelement auf, wobei der induktive Speicher mit dem zugehörigen Überträger gekoppelt ist und der Schaltkreis im geschalteten Zustand elektrische Energie aus dem Überträger aufnimmt oder in diesen einspeist. Im Hinblick auf die Balancierung erfolgt also die Übertragung zwischen den Schaltkreisen über induktive Speicher, wie beispielsweise Spulen.

In einer besonders bevorzugten Ausgestaltung werden die Schaltkreise, die zu einer Spannungsquelle gehören, in einem gemeinsamen Takt geschaltet. Hierdurch wird der Steueraufwand für die Balancierung der Batterien oder der Kondensatoren in einer Spannungsquelle deutlich reduziert.

In einer bevorzugten Ausgestaltung sind die Schaltkreise der Spannungsquellen untereinander elektrisch leitend verbunden, um elektrische Energie während des Ladevorgangs von der einen Spannungsquelle zu der anderen Spannungsquelle zu übertragen. Hierbei erfolgt die Übertragung der elektrischen Energie nicht induktiv über den Überträger, sondern über eine elektrische Verbindung, die den induktiv an einer bereits vollständig geladenen Spannungsquelle geleiteten Ladestrom an die andere Spannungsquelle weiterleitet.

Die vorstehende Erfindung wird nachfolgend von Schaltplänen näher erläutert. Es zeigt:
- Fig. 1: den Vorgang der Balancierung von Batterien und Kondensatoren,
- Fig. 2: den Vorgang des Ladens und des Balancierens der Batterien und der Kondensatoren,
- Fig. 3: den Vorgang der Entmagnetisierung,
- Fig. 4: den Vorgang des Motorbremsbetriebs und
- Fig. 5: einen Schaltplan zur Kaskadierung von zwei Batterien.

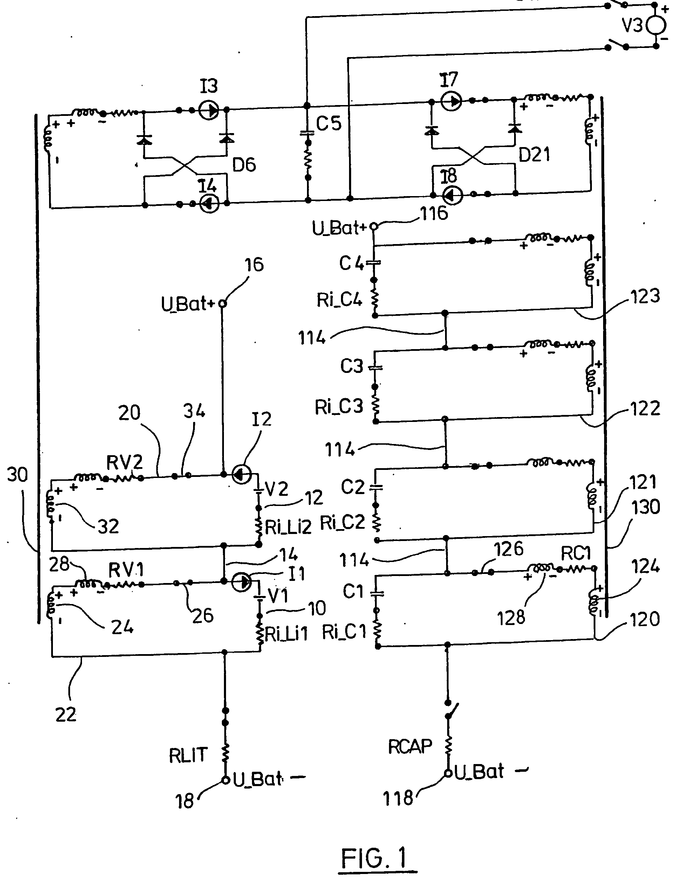

Fig. 1 zeigt Lithium-Ionen-Zellen 10, 12, die in ihrem Ersatzschaltbild jeweils als Spannungsquellen V1 und V2 sowie ihren Innenwiderständen Ri_L1 und Ri_Li2 dargestellt sind. Um die Arbeitsweise der Balanciereinheit besser erklären zu können, sei nachfolgend angenommen, dass V2 größer als V1 ist.

Die Lithium-Ionen-Zellen 10, 12 sind über eine Leitung 14 elektrisch miteinander verbunden und erzeugen so an den Klemmen 16, 18 die Batteriespannung U_BAT. Jeder der Lithium-Ionen-Zellen 10 oder 12 ist mit einem Schaltkreis 20, 22 verbunden. Nachfolgend wird der Schaltkreis 22 der Lithiumzelle 10 näher beschrieben: Der Schaltkreis besitzt eine Spule 24, die als induktiver Speicher des Schaltkreises 22 dient. Ferner besitzt der Schaltkreis 22 ein Schaltelement 26, das im geschlossenen Schaltzustand dargestellt ist. Ferner sind eine weitere Spule 28 sowie ein Schaltwiderstand RV1 in dem Schaltkreis 22 vorgesehen.

Die als induktiver Speicher dienende Spule 24 ist induktiv mit einem Eisenkern 30 gekoppelt, der als Überträger dient.

Der Schaltkreis 20 der Lithiumzelle 12 ist entsprechend aufgebaut, wobei die als induktiver Speicher dienende Spule 32 ebenfalls induktiv mit dem Überträger 30 gekoppelt ist. Der Schaltkreis 20 wird über das Schaltelement 34 geschaltet.

Im Balancierungsbetrieb werden die Schalter 26 und 34 synchron geöffnet und geschlossen. Die Pulsweiten für die Ansteuerung der Schaltelemente 26 und 34 werden von einer nicht dargestellten Steuereinheit bestimmt. Im Leitzustand sind die Schalter 26 und 34 geschlossen.

Wenn der Schalter 26 geschlossen ist, fließt ein Strom durch die Spule 24 und den Überträger 30 in die Spule 32 des Schaltkreises 20. Ebenso fließt ein Strom, jedoch in entgegengesetzter Richtung von der zweiten Lithiumzelle 12 über die Spule 32 und den Überträger 30 in die Spule 24.

Der resultierende Strom ist unter Annahme, dass die Spannung V2 größer als V1 ist, im Schaltkreis 20 als Strom I2 dargestellt und in Schaltkreis 22 als Strom I1 dargestellt. Der Strom I1 ist ein Ladestrom für die Lithium-Ionen-Zelle 10, während der Strom I2 eine Entladung für die Lithiumzelle 12 bewirkt.

Als weitere Spannungsquelle ist in Fig. 1 eine Reihenschaltung von Kondensatoren C1 bis C4 dargestellt. Auch die Kondensatoren sind jeweils über Schaltkreise 120, 121, 123 induktiv mit dem Überträger 130 gekoppelt.

Die Kondensatoren C1 bis C4 sind in einer elektrischen Verbindung 114 in Reihe geschaltet, wobei über die in Reihe geschalteten Kondensatoren an den Klemmen 116, 118 die Batteriespannung U_BAT anliegt.

Die Schaltkreise 120, 121, 122, 123 sind baugleich und werden synchron getaktet miteinander betrieben. Auch hier erfolgt die Ansteuerung der Schaltkreise pulsweitenmoduliert mit einer nicht dargestellten Steuereinheit. Nachfolgend wir der Schaltkreis 120 exemplarisch für die weiteren Schaltkreise näher beschrieben. Der Schaltkreis 120 entspricht in seinem Aufbau den Schaltkreisen 20 und 22, wie sie für die Lithium-Ionen-Zellen 10 und 12 eingesetzt werden. Der Schaltkreis besitzt den Schalter 126 sowie einen als Spule 124 ausgebildeten Induktivspeicher über den der Schaltkreis 120 induktiv von dem Überträger 130 gekoppelt ist. Der Schaltkreis 120 besitzt zusätzlich eine Spule 128 und einen ohmschen Widerstand RC1. Der Kondensator C1, der bevorzugt als Doppelschichtkondensator ausgebildet ist, besitzt einen Innenwiderstand Ri_C1. Im balancierten Betrieb erfolgt durch das Synchronschalten der Schaltkreise 120 bis 123 ein Spannungsausgleich zwischen den Kondensatoren nach demselben Prinzip wie bei den Lithiumzellen 10 und 12.

Fig. 1 zeigt für zwei Spannungsquellen, bestehend aus Lithium-Ionen-Zellen 10 und 12, Kondensatoren C1 bis C4, eine Balanciereinheit, die aus zwei parallel zueinander betriebenen Balanciereinheiten besteht, von denen jede induktiv an einen entsprechenden Überträger 30, 130 gekoppelt ist.

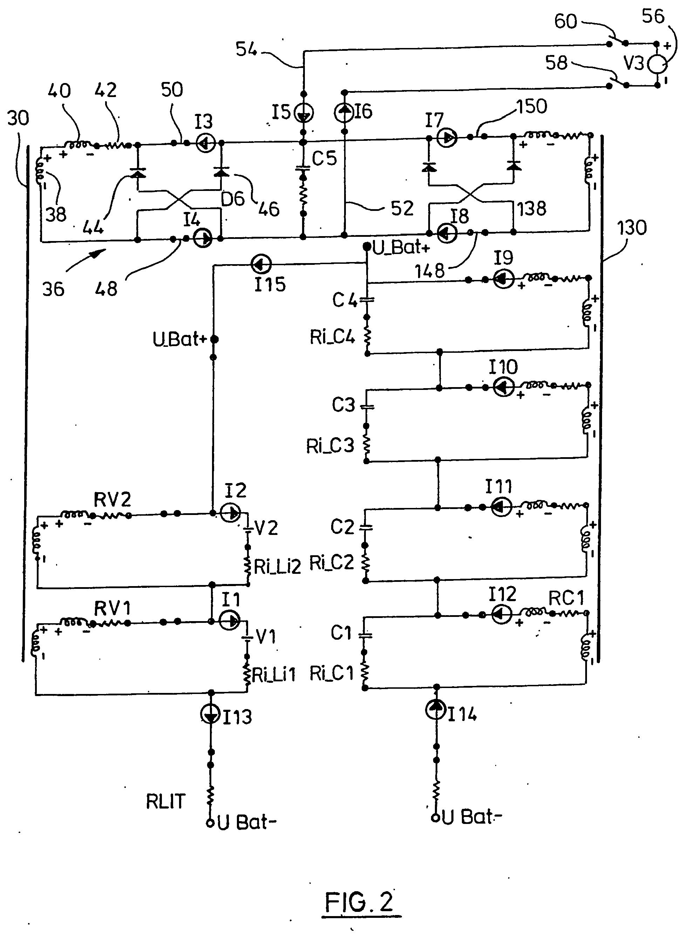

Fig. 2 zeigt den Ladevorgang bei gleichzeitiger Balancierung der Lithium-Ionen-Zellen und der Kondensatoren. Gleiche Bauteile sind mit gleichen Bezugszeichen wie in Fig. 1 versehen, wobei zur besseren Übersicht die für das Laden verwendeten Komponenten beschrieben werden.

Fig. 2 zeigt eine Entmagnetisierungseinheit 36, die eine Spule 38 und eine Spule 138 aufweist. Die Spule 38 ist induktiv mit dem Überträger 30 gekoppelt, während die Spule 138 induktiv mit dem Überträger 130 gekoppelt ist. Die Spulen 138 und 38 dienen als induktive Ladespeicher. Die Entmagnetisierungseinheit 36 ist zum Laden der Lithium-Ionen-Zellen 10 und 12 über die Kondensatoren C1 und C4 jeweils im Prinzip gleich aufgebaut. Es wird daher nachfolgend der für das Laden der Lithium-Ionen-Zellen 10 und 12 vorgesehene Teil der Entmagnetisierungseinheit 36 näher beschrieben.

Der für den Ladevorgang der Lithium-Ionen-Zellen 10 und 12 vorgesehene Teil der Entmagnetisierungseinheit besitzt zusätzlich zu der Spule 38 eine weitere Spule 40 und einen ohmschen Widerstand 42. Zwei Dioden 44 und 46 bilden zusammen mit den Leitern 48 und 50 eine Brücke. Die Schalter 48 und 50 sind bevorzugt als Transistoren ausgeführt. Die so gebildete Transistorbrücke ist über Leitungen 52 und 54 mit einer Netzspannung 56 verbunden, wobei zur Trennung der Netzspannung Schalter 58, 60 vorgesehen sind. In einem Zwischenkreis zwischen den Leitungen 52 und 54 ist ein Zwischenkreiskondensator C5 vorgesehen. Der Zwischenkreiskondensator C5 ist so dimensioniert, dass er auch als Zwischenkreiskondensator für die Transistorbrücke 150, 148 verwendet werden kann, die über die Spule 138 und den Überträger 130 die Kondensatoren C1 bis C4 speist.

In der Entmagnetisierungseinheit fließt im leitenden Zustand der Transistoren 48, 50 sowie 148, 158 ein Strom durch die Spulen 38 und 138. Wird die Entmagnetisierungseinheit über die Schalter 58, 60 von der Netzspannung 56 getrennt, so fließt eine Entmagnetisierungsstrom durch die Spulen 38 und 138 in den Zwischenkreiskondensator C5.

Die Entmagnetisierungseinheit 36 wird mit seinen Transistoren 48 und 50, 148 und 150 synchron zu den Transistoren 26 und 34 sowie 126, 134 etc. der Schaltkreise 20, 22, 120 bis 123 angesteuert. Sind die Schalter 58 und 60 geschlossen, so erfolgt ein Ladebetrieb für die Entmagnetisierungseinheit 36. Sind die Schalter 58 und 60 geöffnet, erfolgt ein Balancieren zwischen den Lithium-Ionen-Zellen 10 und 12 einerseits und den Kondensatoren C1 bis C4 andererseits.

In Fig. 2 ist ein Strom I15 dargestellt, der von den in Reihe geschalteten Kondensatoren C1 bis C4 zu den Lithiumzellen 10 und 12 fließt. Der Strom I15 ist ein Ladestrom, der auftritt, wenn die Kondensatoren C1 bis C4 vollständig geladen sind. Durch den Ladestrom I15 wird der Ladevorgang der Lithium-Ionen-Zellen 10 und 12 unterstützt.

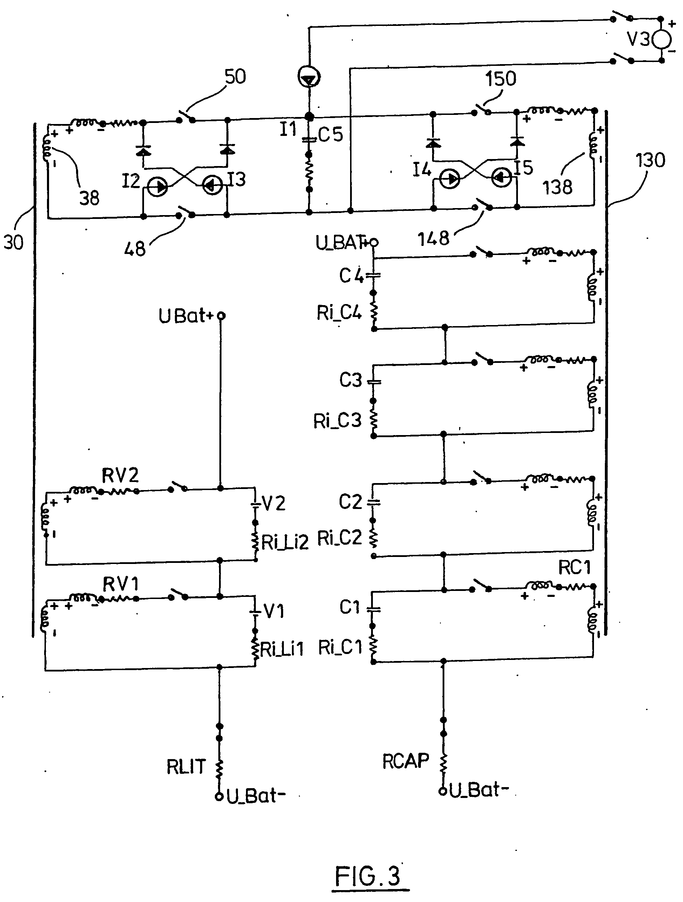

Nachfolgend wird in Fig. 3 der Vorgang der Entmagnetisierung über den Zwischenkreiskondensator C5 näher beschrieben.

Während des Entmagnetisierens sind die Transistoren 148, 158 sowie 48 und 50 nicht leitend. Der Entmagnetisierungsstrom aus dem Überträger und 30 und 130 fließt über die Spulen 38 und 138 in der I2, I3, I5 und I6 dargestellten Richtung als Strom 1 in den Zwischenkreiskondensator C5.

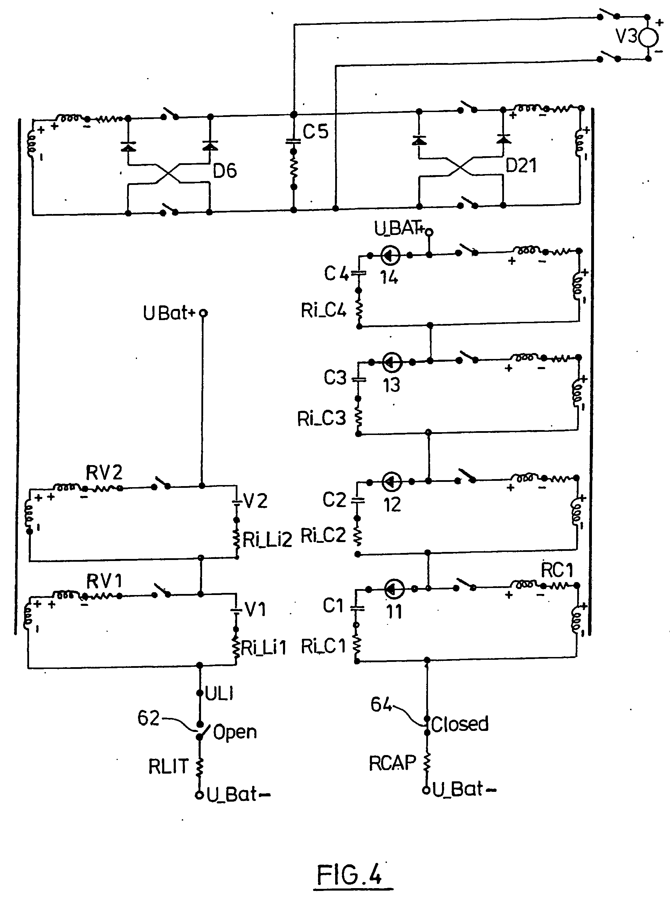

Fig. 4 zeigt den Betrieb beim generatorischen Betrieb, bei dem ein Ladestrom durch den Motor erzeugt wird. In diesem Fall wird ein Schalter 62 geöffnet und die Lithium-Ionen-Zellen werden von dem Ladestrom getrennt. Die Kondensatoren C1 bis C4 werden über den geschlossenen Schalter 64 mit dem Ladestrom versorgt. Bei diesem Vorgang werden die Schaltkreise 20, 22, 120, 122 etc. weiter getaktet betrieben, so dass ein Balancieren zwischen den Kondensatoren C1 und C4 erfolgt und darin die Lithium-Ionen-Zellen 10 und 12 miteinander balanciert sind.

Zusammenfassend kann das Energiemanagement bei dem erfindungsgemäßen Flurförderzeug wie folgt dargestellt werden. Durch den Überträger 30 mit seinen Spulen 38, 22 und 32 erfolgt ein Laden und Balancieren der Lithiumzellen 10 und 12. Durch den Überträger 130 erfolgt ein Laden und Balancieren der einzelnen Doppelschichtkondensatoren C1 und C4.

Die Überträger 30 und 130 besitzen mit den Spulen 38 und 138 eine Entmagnetisierungswicklung, die im ausgeschalteten Zustand die Energie über die Transistorbrücke 44 bis 50 in den Zwischenkreiskondensator C5 zurückspeist.

Das Übersetzungsverhältnis der Primärwicklungen 38 und 138 ist an die Netzspannung 56 angepasst. Die Netzspannung 56 kann beispielsweise 400 V betragen.

Die Sekundärwicklungen 24, 32, 124 etc. sind mit einander jeweils identisch und an die entsprechende Spannung der Lithium-Ionen-Zellen bzw. der Kondensatoren angepasst. Die Lithium-Ionen-Zellen besitzen beispielsweise eine Nennspannung von 3,6 V, während die Doppelschichtkondensatoren eine Nennspannung von 2,4 V besitzen.

Die Schalter in den Schaltkreisen bilden die Verbindung zwischen den Überträgern 30 und 130 und den Lithium-Ionen-Zellen und Kondensatoren.

Die Schalter 48, 50, 148, 150 bilden die Verbindung zwischen den Überträgern 130 und 30 zu dem Zwischenkreiskondensator C5.

Die Schalter 62 und 64 bilden die Verbindung zu einer Antriebssteuerung, wobei die Minusanschlüsse zu der Batterie getrennt ausgeführt sind, um die Lithium-Ionen-Zellen 10 und 12 im generatorischen Betrieb trennen zu können.

Die Schalter 58 und 60 bilden die Verbindung zwischen den Systemen und der Netzspannung 56.

Die Schalter 128, etc. der Schaltkreise 120, 121, 122, 123 werden mit Taktfrequenz von beispielsweise 100 kHz im pulsweitenmodulierten Verfahren angesteuert, um die Kondensatoren C1 bis C4 parallel zu schalten. Ungleiche Spannungen zwischen den Kondensatoren werden balanciert, indem bei jedem Takt ein Stromimpuls in die jeweils schwächste Zelle fließt. Bei einem Tastverhältnis von weniger als 50 % ergibt sich eine maximale Einschaltzeit. Der Stromanstieg wird durch die Längsinduktivität der Überträger 30 und 130 ergänzt.

Über die Transistoren 48, 50, 148, 150 und den Zwischenkreiskondensator C5 findet ebenfalls ein Ladungsausgleich zwischen den Lithium-Ionen-Zellen 10, 12, den Doppelschichtkondensatoren C1 bis C4 statt. Alle Transistoren der Schaltkreise und der Transistorbrücken im Netzteil können mit gleichen Taktfrequenzen angesteuert werden, bis die Lithium-Ionen-Zellen und die Kondensatoren die gewünschte Spannung haben. Wenn Schalter 58 und 60 zugeschaltet werden, erfolgt ein Energietransport aus dem Netz bis zu einer vollständigen Ladung der Energiespeicher.

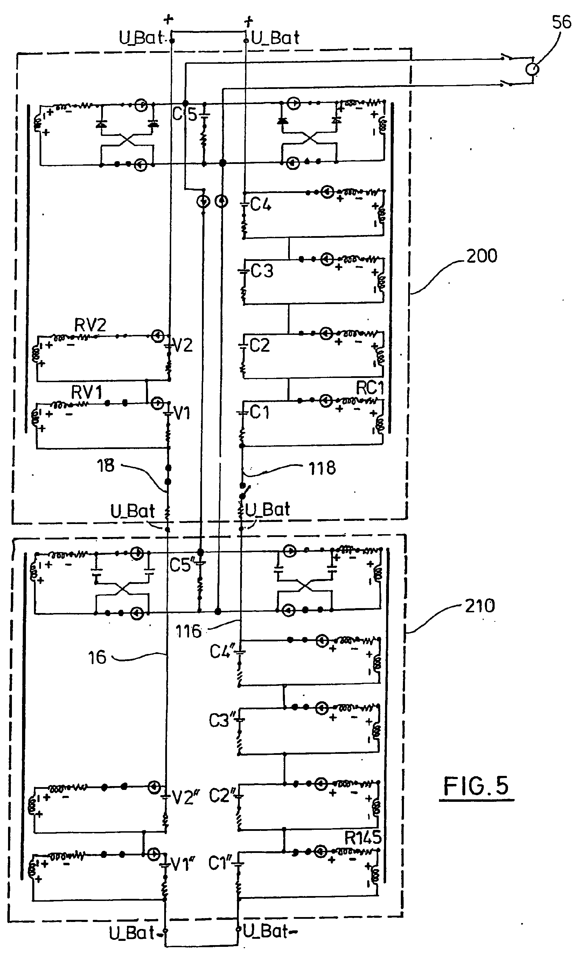

Fig. 5 zeigt eine Kaskadierung der Balanciereinheiten, bei der diese parallel zur Netzspannung 56 geschaltet sind und die Ausgänge der Balanciereinheiten in Reihe geschaltet sind. Durch die Reihenschaltung kann beispielsweise bei zwei Balanciereinheiten mit Batterien von 24 V / 40 Ah eine Gesamtbatterie mit 48 V / 40 Ah zur Verfügung gestellt werden. Durch Vertauschen der Pole ist auch eine Parallelschaltung der Balanciereinheiten möglich, so dass aus zwei Balanciereinheiten mit Batterien von 24 V / 40 Ah insgesamt eine Batterie für das Fahrzeug mit 24 V / 80 Ah zur Verfügung steht. In der in Fig. 5 dargestellten Schaltung ist der Minuspol der Batterie 18 der ersten Spannungseinheit 200 mit dem Pluspol 216 der zweiten Spannungseinheit 210 verbunden. Ebenso ist der zweite Minuspol 118 der Kondensatoren mit dem zugehörigen Pluspol der Kondensatoren 116 verbunden. In Fig. 5 werden für die Anschlüsse der Balanciereinheiten 200 und 210 die gleichen Bezugszeichen wie bei den Balanciereinheiten aus den Fign. 1 bis 4 verwendet.

Über die Parallelschaltung der Eingänge der Netzspannung 56, auch wenn keine Einspeisung aus dem Netz erfolgt, findet ein Ladungsausgleich zwischen den als Batterien arbeitenden Balanciereinheiten 200 und 210 statt. Wie vorstehend beschrieben, erfolgt ein Ladungsausgleich innerhalb einer Kaskade über die Überträger 30 und 130. Durch die Parallelschaltung der Kondensatoren C1 bis C4 in der Balanciereinheit 200 mit den Kondensatoren C1" bis C4" in der zweiten Balanciereinheit 210 erfolgt ein Spannungsausgleich zwischen den Balanciereinheiten 200 und 210, während gleichzeitig weiterhin ein Balancieren innerhalb der Balanciereinheiten 200 und 210 erfolgt.

## Patentansprüche

1. Flurförderzeug mit einem elektrischen Antrieb, einer ersten Spannungsquelle und einer zweiten Spannungsquelle, wobei die erste Spannungsquelle mehrere in Reihe geschaltete Batterien (10, 12) und die zweite Spannungsquelle mehrere in Reihe geschaltete Kondensatoren (C1-C4) aufweist,
**dadurch gekennzeichnet, dass** ein gemeinsamer kapazitiver Speicher (C5) vorgesehen ist, wobei jede Spannungsquelle eine Balanciereinheit aufweist, die in jedem Betriebszustand des Flurförderzeugs aktiv die Batterien und aktiv die Kondensatoren bei ungleicher Spannung balanciert, wobei jede Balanciereinheit eine an eine Netzspannung anschließbare und induktiv mit einem Überträger (30, 130) gekoppelte Entmagnetisierungseinheit aufweist, wobei die Entmagnetisierungseinheit mindestens ein Schaltelement (48, 50, 148, 150) und einen induktiven Speicher (38, 138) aufweist, wobei die Entmagnetisierungseinheit derart ausgebildet ist, dass im eingeschalteten Zustand der Schaltelemente elektrische Energie von dem induktiven Speicher auf den zugehörigen Überträger übertragen wird und im ausgeschalteten Zustand ein Entmagnetisierungsstrom aus den Überträgern über den induktiven Speicher (38) in den gemeinsamen kapazitiven Speicher (C5) übertragen wird.

2. Flurförderzeug nach Anspruch 1, **dadurch gekennzeichnet, dass** die Balanciereinheit derart ausgebildet ist, dass sich elektrische Energie von der Batterie mit einer höheren Spannung an eine oder mehrere Batterien mit einer niedrigeren Spannung überträgt.

3. Flurförderzeug nach Anspruch 1 oder 2, **dadurch gekennzeichnet, dass** die Balanciereinheit derart ausgebildet ist, dass sich elektrische Energie von einem Kondensator (C1-C4) mit einer höheren Spannung auf einen oder mehrere Kondensatoren mit einer niedrigeren Spannung überträgt.

4. Flurförderzeug nach einem der Ansprüche 1 bis 3, **dadurch gekennzeichnet, dass** die Spannungsquellen derart ausgebildet ist, dass sie über eine externe Netzspannung (56) geladen werden, wobei die Balanciereinheit derart ausgebildet ist, dass sich elektrische Energie von einer geladenen Spannungsquelle auf die noch nicht vollständig geladene Spannungsquelle überträgt.

5. Flurförderzeug nach einem der Ansprüche 1 bis 4, **dadurch gekennzeichnet, dass** die Balanciereinheit derart ausgebildet ist, dass sie bei einem generatorischen Betrieb des elektrischen Antriebs einen Ladestrom des elektrischen Antriebs an eine der Spannungsquellen anlegt.

6. Flurförderzeug nach Anspruch 5, **dadurch gekennzeichnet, dass** die Balanciereinheit derart ausgebildet ist, dass sie den Ladestrom an die Kondensatoren anlegt.

7. Flurförderzeug nach einem der Ansprüche 1 bis 6, **dadurch gekennzeichnet, dass** die Balanciereinheit jeder Spannungsquelle einen induktiven Überträger (30, 130) aufweist, mit dem jeweils die Batterien (10, 12) und die Kondensatoren (C1-C4) an einen Schaltkreis (20, 22, 120, 123) induktiv gekoppelt sind.

8. Flurförderzeug nach Anspruch 7, **dadurch gekennzeichnet, dass** jeder der Schaltkreise einen induktiven Speicher (24, 32, 124) aufweist, wobei der induktive Speicher mit dem zugehörigen Überträger (30, 130) induktiv gekoppelt ist und der Schaltkreis derart ausgebildet ist, dass er im geschalteten Zustand elektrische Energie aus dem Überträger aufnimmt oder in diesen einspeist.

9. Flurförderzeug nach Anspruch 7 oder 8, **dadurch gekennzeichnet, dass** die Schaltkreise zu einer Spannungsquelle in einem gemeinsamen Takt geschaltet sind.

10. Flurförderzeug nach Anspruch 7 oder 8, **dadurch gekennzeichnet, dass** die Schaltkreise beider Spannungsquellen in einem gemeinsamen Takt schalten.

11. Flurförderzeug nach einem der Ansprüche 7 bis 10, **dadurch gekennzeichnet, dass** die Schaltkreise der Spannungsquelle untereinander derart elektrisch leitend verbunden sind, dass sie elektrische Energie während des Ladevorgangs von der einen Spannungsquelle zu der anderen Spannungsquelle übertragen.

## Claims

1. An industrial truck with an electric drive, a first voltage source and a second voltage source, wherein the first voltage source comprises several batteries (10, 12) connected in series, and the second voltage source comprises several capacitors (C1-C4) connected in series,
**characterised in that** a common capacitive storage device (C5) is provided, each voltage source comprising a balancer unit which balances the batteries actively and the capacitors actively at unequal voltage in each operation status of the industrial truck, wherein each balancer unit comprises a demagnetization unit which is inductively coupled to a transmitter (30, 130) and can be connected to a mains voltage, wherein the demagnetization unit comprises at least one switching element (49, 50, 148, 150) and an inductive storage device (38, 138), the demagnetization unit being made such that in the switched-on state of the switching elements, electric energy is transmitted from the inductive storage device to the associated transmitter and in the switched-off status a demagnetization current is transmitted from the transmitters into the common capacitive storage device (C5) via the inductive storage device (38).

2. The industrial truck according to claim 1, **characterised in that** the balancer unit is made such that electric energy is transmitted from the battery with a higher voltage to one or several batteries having a lower voltage.

3. An industrial truck according to claim 1 or 2, **characterised in that** the balancer unit is made such that electric energy is transmitted from a capacitor (C1-C4) having a higher voltage to one or several capacitors with a lower voltage.

4. An industrial truck according to any one of claims 1 to 3, **characterised in that** the voltage sources are made such that they are charged via an external mains voltage (56), the balancer unit being made such that electric energy is transmitted from a charged voltage source to the still not completely charged voltage source.

5. An industrial truck according to any one of claims 1 to 4, **characterised in that** the balancer unit is made such that in a generator operation of the electric drive, it applies a charging current of the electric drive to one of the voltage sources.

6. The industrial truck according to claim 6, **characterised in that** the balancer unit is made such that it applies the charging current to the capacitors.

7. An industrial truck according to any one of claims 1 to 6, **characterised in that** the balancer unit of each voltage source comprises an inductive transmitter (30, 130), by which the batteries (10, 12) and the capacitors (C1-C4), respectively, are inductively coupled to a circuitry (20, 22, 120, 123).

8. The industrial truck according to claim 7, **characterised in that** each one of the circuitries comprises an inductive storage device (24, 32, 124), the inductive storage device being inductively coupled to the associated transmitter (30, 130) and the circuitry being made such that it receives electric energy from the transmitter or feeds it into the same in the switched condition.

9. An industrial truck according to claim 7 or 8, **characterised in that** the circuitries are connected to a voltage source in a common clock pulse.

10. An industrial truck according to claim 7 or 8, **characterised in that** the circuitries of both voltage sources switch in a common clock pulse.

11. An industrial truck according to any one of claims 7 to 10, **characterised in that** the circuitries of the voltage sources are electrically conductively connected among each other such that they transmit electric energy from one voltage source to the other voltage source during the charging process.

## Revendications

1. Chariot de manutention avec un entrainement électrique, une première source de tension et une deuxième source de tension, dans lequel la première source de tension comporte plusieurs batteries (10, 12) montées en série, et la deuxième source de tension comporte plusieurs condensateurs (C1-C4) montés en série,
**caractérisé en ce que** un accumulateur capacitif commun (C5) est prévu, chaque source de tension comportant une unité d'équilibrage qui tient les batteries en équilibre de manière active et tient les condensateurs en équilibre de manière active chez tension inégale dans chaque état de fonctionnement du chariot de manutention, chaque unité d'équilibrage comportant une unité de démagnétisation qui est couplée de façon inductive à un transducteur (30, 130) et est raccordable à une tension réseau, l'unité de démagnétisation comportant au moins un élément de commutation (49, 50, 148, 150) et un accumulateur inductif (38, 138), l'unité de démagnétisation étant faite tellement que dans l'état connecté des éléments de commutation, de l'énergie électrique est transférée à partir de l'accumulateur inductif au transducteur associé, et dans l'état d'arrêt un courant de démagnétisation est transmis à partir des transducteurs vers l'accumulateur capacitif commun (C5) via l'accumulateur inductif (38).

2. Chariot de manutention selon la revendication 1, **caractérisé en ce que** l'unité d'équilibrage est faite tellement que de l'énergie électrique est transmise de la batterie avec une tension plus haute à une ou plusieurs batteries qui ont une tension plus basse.

3. Chariot de manutention selon la revendication 1 ou 2, **caractérisé en ce que** l'unité d'équilibrage est faite tellement que de l'énergie électrique est transmise d'un condensateur (C1-C4) avec une tension plus haute à un ou plusieurs condensateurs qui ont une tension plus basse.

4. Chariot de manutention selon l'une quelconque des revendications 1 à 3, **caractérisé en ce que** les sources de tension sont faites tellement qu'elles sont chargées par une tension réseau externe (56), l'unité d'équilibrage étant faite tellement que de l'énergie électrique est transmise d'une source de tension chargée à une source de tension qui n'est pas encore complètement chargée.

5. Chariot de manutention selon l'une quelconque des revendications 1 à 4, **caractérisé en ce que** l'unité d'équilibrage est faite tellement que dans un fonctionnement de l'entrainement électrique comme générateur, elle applique un courant de chargement de l'entrainement électrique à une des sources de tension.

6. Chariot de manutention selon la revendication 6, **caractérisé en ce que** l'unité d'équilibrage est faite tellement qu'elle applique le courant de chargement aux condensateurs.

7. Chariot de manutention selon l'une quelconque des revendications 1 à 6, **caractérisé en ce que** l'unité d'équilibrage de chaque source de tension comporte un transducteur inductif (30, 130), par lequel les batteries (10, 12) et les condensateurs (C1-C4), respectivement, sont couplés de façon inductive à un circuit (20, 22, 120, 123).

8. Chariot de manutention selon la revendication 7, **caractérisé en ce que** chacun des circuits comporte un accumulateur inductif (24, 32, 124), l'accumulateur inductif étant couplé de façon inductive au transducteur associé (30, 130) et le circuit étant fait tellement qu'il reçoit de l'énergie électrique du transducteur ou l'introduit à cela dans l'état commuté.

9. Chariot de manutention selon la revendication 7 ou 8, **caractérisé en ce que** les circuits sont commutés à une source de tension avec cycle commun.

10. Chariot de manutention selon les revendications 7 ou 8, **caractérisé en ce que** les circuits des deux sources de tension commutent dans un cycle commun.

11. Chariot de manutention selon l'une quelconque des revendications 7 à 10, **caractérisé en ce que** les circuits des sources de tension sont tellement électriquement connectés entre eux de façon conductrice qu'ils transmettent de l'énergie électrique d'une source de tension à l'autre source de tension pendant l'opération de chargement.
